# EUROPÄISCHE PATENTSCHRIFT

(11) **EP 1 093 039 B1**
(45) Veröffentlichungstag und Bekanntmachung des Hinweises auf die Patenterteilung: **26.11.2003**
(21) Anmeldenummer: 99120537.8
(22) Anmeldetag: 15.10.1999
(51) Int. Cl.: G05B 23/00, G06F 1/00

(54) **Programmierbares Feldmessgerät**
Programmable field mounted sensor
Capteur de terrain programmable

(43) Veröffentlichungstag der Anmeldung: 18.04.2001
(73) Patentinhaber: Endress + Hauser Flowtec AG, CH-4153 Reinach BL 1 (CH)
(72) Erfinder: Gillen, Thomas, 79650 Schopfheim (DE)
(74) Vertreter: Andres, Angelika

(56) Entgegenhaltungen:
- EP-A- 0 940 743
- WO-A-97/19397
- DE-C- 19 732 546
- DE-U- 29 907 909

## Beschreibung

Die Erfindung betrifft ein programmierbares Feldmeßgerät.

In der Automatisierungs- und Prozeßsteuerungstechnik werden häufig Feldmeßgeräte eingesetzt, die eine Prozeßvariable in einem Prozeßablauf messen.
Feldmeßgeräte zur Durchfluß-, Füllstands, Differenzdruck-, Temperaturbestimmung etc. sind allgemein bekannt. Zur Erfassung der entsprechenden Prozeßvariablen, Massen- oder Volumenfluß, Füllhöhe, Druck, Temperatur etc., müssen die Feldmeßgeräte in unmittelbarer Nähe zu der betreffenden Prozeßkomponente angeordnet sein.
Die Feldgeräte erzeugen jeweils Meßsignale, die ein Maß für die erfaßte Prozeßvariablen sind. Die Meßsignale werden an eine Warte oder einem Leitsystem weitergeleitet. In der Regel erfolgt die gesamte Prozeßsteuerung von der Warte aus, wo die verschiedenen Meßsignale unterschiedlicher Feldmeßgeräte auswertet werden und aufgrund der Auswertung Steuersignale für Feldgeräte (Stellglieder) erzeugt werden, die den Prozeßablauf steuern.
Die Signalübertragung zwischen Feldmeßgerät und Warte bzw. Feldgerät und Warte erfolgt z.B. über eine Stromschleife oder über einen digitalen Datenbus.

Neben analogen Feldmeßgeräten finden immer mehr programmierbare Feldmeßgeräte Verwendung. Häufig werden hierfür ASICs (application-specific integrated circuits) und SMDs (surface mounted devices) eingesetzt.

Bei den programmierbaren Feldmeßgeräten wird immer mehr "Intelligenz" ins Feld zum eigentlichen Meßort verlagert.
Es sind deshalb verschiedene Funktionalitäten vor Ort möglich, z.B. kann die Art und Weise der Speicherung der Meßdaten unterschiedlich sein, die Meßdatenkorrektur aufgrund von Kalibrierfaktoren kann unterschiedlich erfolgen, die Meßdatenerfassung und Meßdatenauswertung kann unterschiedlich sein, zusätzliche Regel- und Stellfunktionen können eingebaut werden, die Signalübertragung zur Warte kann verschieden sein, weiterhin sind unterschiedliche Arten der Eigenüberwachungen des Feldmeßgerätes (predictive maintenance) möglich.
Das Feldmeßgerät übermittelt nicht mehr nur ein einfaches Meßsignal, sondern ein bereits aufbereitetes Meßsignal und ev. noch weitere Zusatzinformationen an die Warte oder an andere Feldmeßgeräte.

Die Summe dieser oben genannten Möglichkeiten macht die Funktionalität des Feldmeßgerätes aus.
Für jede Funktionalität ist ein entsprechendes Steuerprogramm (Software) notwendig. Dieses Steuerprogramm wird normalerweise in einem nichtflüchtigen Speicher im Sensor abgespeichert.
Die Funktionalität eines Feldmeßgerätes hängt somit in entscheidendem Maße von dem Steuerprogramm ab, das in der Regel vom Hersteller des Feldmeßgerätes zur Verfügung gestellt wird.
Ein solches Steuerprogramm kann gewisse Grundfunktionen (Basisfunktionalität) oder aber auch erweiterte Funktionalitäten umfassen.

Das Steuerprogramm wird normalerweise bei der Herstellung des Feldmeßgerätes implementiert. D.h. die Funktionalität des Feldgerätes ist somit nach seiner Herstellung fest vorgegeben und kann nicht mehr einfach geändert werden. Hierzu wäre eine Umprogrammierung d.h. eine Steuerprogrammänderung im Feldmeßgerät notwendig.
Eine derartige Umprogrammierung eines Feldmeßgerätes ist aber sehr aufwendig. Eine andere Möglichkeit der Änderung besteht darin, den Speicher mit dem alten Steuerprogramm gegen einen Speicher mit einem neuen Steuerprogramm vor Ort auszutauschen. Hierzu muß das Gehäuse des Feldmeßgerätes geöffnet und der Speicher von Hand, durch einen Service-Techniker ausgetauscht werden. Während dieser Zeit ist die Spannungsversorgung des Feldmeßgeräts selbstverständlich ausgeschaltet und eine Übertragung von Meßsignale an die Warte ist nicht möglich. Ist das Feldmeßgerät mit der Warte über einen digitalen Datenbus verbunden, so muß das Feldgerät nach dem Speicheraustausch auf dem Datenbus neu initialisiert werden.
Eine weitere Möglichkeit der Umprogrammierung besteht darin, das Feldmeßgerät z.B. mit einem tragbaren Personalcomputer (z.B. Laptop) zu verbinden und das neue Steuerprogramm "einzuspielen". Dies erfordert einen umprogrammierbaren Speicher im Feldmeßgerät.
Diese Möglichkeiten sind relativ aufwendig und in beiden Fällen ist die Erfassung der Prozeßvariablen für längere Zeit unterbrochen.
Eine weitere Möglichkeit bestünde darin, bereits bei der Herstellung des Feldmeßgerätes unterschiedliche Steuerprogramme abzuspeichern und das gewünschte Steuerprogramm vor Ort auszuwählen. Dies könnte z.B. über einen einfachen Mikroschalter erfolgen.
Da die Programmentwicklung je nach Aufwand und Umfang erhebliche Kosten verursacht, unterscheiden sich Feldmeßgeräte mit unterschiedlichen Funktionalitäten u.a. im Preis. Eine einfache Lösung mit einem Mikroschalter kann deshalb einen Mißbrauch, d.h. die Auswahl eines Steuerprogramms ohne Berechtigung, nicht ausschließen.

Aus der EP-PS 0537738 "Method of protecting computer software" und der EP-OS 0940 743 "Compact transparent dongle device" sind jeweils Softwareschutzvorrichtungen und entsprechende Verfahren bekannt.
Diese bekannten Softwareschutzvorrichtungen werden normalerweise mit der parallelen Schnittstelle des verwendeten Personalcomputers (PC) verbunden.
Der Anwender ruft ein bestimmtes Programm z.B. über eine Windows-Oberfläche auf und das ausgewählte Programm erkennt, ob die für die Berechtigung notwendige Softwareschutzvorrichtung vorhanden ist oder nicht. Nur wenn die erforderliche Softwareschutzvorrichtung vorhanden ist, wird das ausgewählte Programm ordnungsgemäß ausgeführt, andernfalls erfolgt ein Programmabbruch.
Hierbei erfolgt die Programmauswahl jedoch manuell vom jeweiligen Programmbenutzer.

Aus der DE-PS 197 32 546 ist ein Gasdetektionssystem bestehend aus einem Gassensor und einem Meßkopf bekannt, die über eine Steckverbindung miteinander verbunden sind. Messwerte vom Gassensor werden vom Meßkopf nur übernommen, wenn die in einem Datenspeicher des Gassensors gespeicherten Daten von einer Auswerteeinheit im Meßkopf akzeptiert werden.

Aufgabe der Erfindung ist es, ein programmierbares Feldmeßgerät zu schaffen, das eine unberechtigte Benutzung von Funktionalitäten verhindert.

Gelöst wird diese Aufgabe durch ein programmierbares Feldmeßgerät mit einer Steuereinheit, die zur Ausführung eines Steuerprogramms dient und die als Schnittstelle einen Steckeranschluß aufweist, der mit einer Softwareschutzvorrichtung lösbar verbunden, die im wesentlichen aus einem Steckergegenstück mit integriertem elektronischen Bauteil besteht, das eine Berechtigungsprüfung durch die Steuereinheit erlaubt.

In einer bevorzugten Ausgestaltung der Erfindung besteht das elektronische Bauteil aus einem Mikrocontroller, dessen Steuerprogrammspeicher gegen Auslesen geschützt ist bzw. geschützt werden kann.

In einer bevorzugten Ausgestaltung der Erfindung besteht das elektronische Bauteil aus einem Peripheral interface controller.

In einer bevorzugten Ausgestaltung der Erfindung wird als Steckeranschluß der Update-Anschluß des Feldmeßgerätes verwendet.

In einer bevorzugten Ausgestaltung der Erfindung besteht die Steuereinheit aus einem Mikroprozessor.

Weiterhin besteht die Erfindung aus einem Verfahren zum Softwareschutz bei einem Feldmeßgerät, das eine Steuereinheit und einen Speicher mit verschiedenen Steuerprogrammvarianten aufweist, mit folgenden Verfahrensschritten:
Start einer Initialisierungsroutine der Steuereinheit,
Abfrage der Kennung einer mit dem Feldmeßgerät lösbar verbundenen Softwareschutzeinrichtung,
Auswahl einer Steuerprogrammvariante durch die Steuereinheit aufgrund der Kennung.

In einer bevorzugten Ausgestaltung der Erfindung wird mit der Abfrage eine in der Steuereinheit erzeugte Zufallsgröße Z an die Softwareschutzeinrichtung übersandt.
In der Steuereinheit und in der Softwareschutzvorrichtung werden aus dieser Zufallsgröße jeweils nach einem Algorithmus neue Werte X1=F1(Z) und X2= F2(Z) berechnet und in der Steuereinheit miteinander verglichen. Bei fehlender Übereinstimmung X1 ≠ X2 erfolgt ein Programm-Stop.

In einer bevorzugten Ausgestaltung der Erfindung wird mit dem in der Softwareschutzvorrichtung berechneten Ergebniswert des Algorithmus die Kennung übertragen und in der Steuereinheit ausgewertet.

Nachfolgend ist die Erfindung anhand eines in der Zeichnung dargestellten bevorzugten Ausführungsbeispiels näher erläutert. Es zeigen:

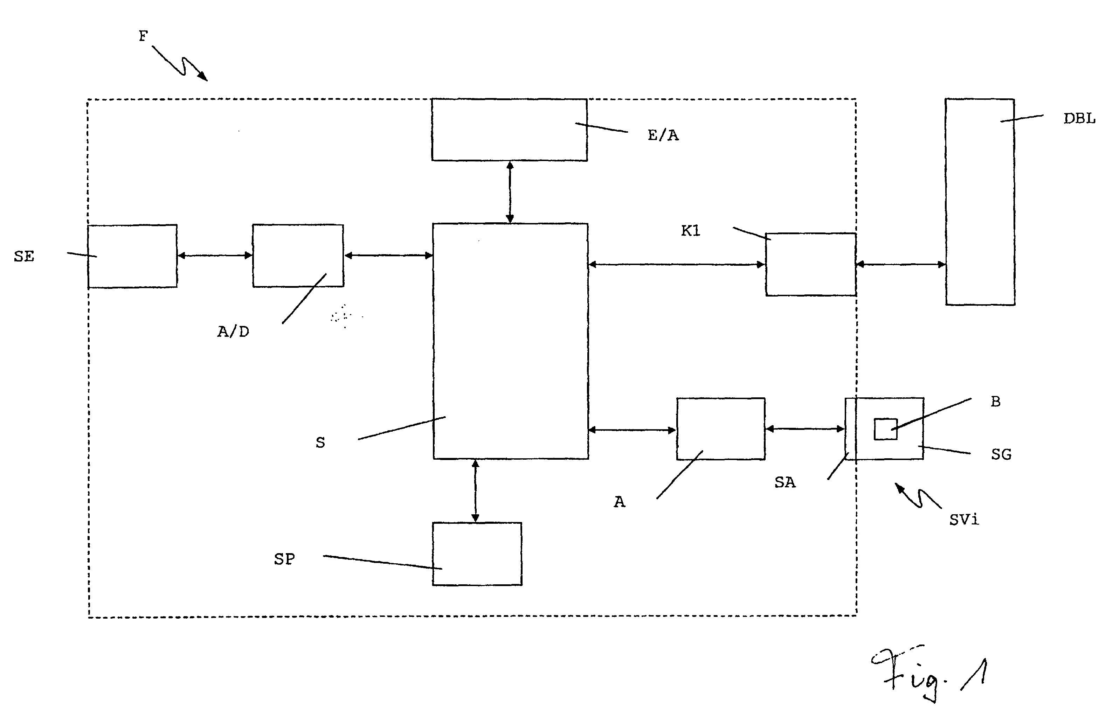

Fig. 1 eine schematische Darstellung eines Feldmeßgerätes das mit einer Sortwareschutzvorrichtung verbunden ist

In Fig. 1 ist ein an sich bekanntes Feldmeßgerät F dargestellt. Das Feldmeßgerät F weist einen Sensor SE auf, der eine Prozeßvariable (z.B. Druck, Temperatur, Durchfluß) erfaßt. Das analoge Meßsignal wird in einem A/D-Wandler A/D in ein digitales Meßsignal umgewandelt und einer Steuereinheit S, die z.B. einen Mikroprozessor aufweist, zugeführt. In der Steuereinheit S wird das Meßsignal ausgewertet.
Ein nicht flüchtiger Speicher SP der mit der Steuereinheit S verbunden ist, dient als Steuerprogrammspeicher. Neben dem Steuerprogramm sind dort auch wichtige Parameter (z.B. Kalibrierfaktoren) abgespeichert. Bei dem nicht flüchtigen Speicher kann es sich beispielsweise um ein EEPROM, einem Flash-Speicher, EPROM etc. handeln.

Zur Anzeige des Meßwertes und zur manuellen Eingabe dient eine mit der Steuereinheit S verbundene Ein/Ausgabeeinheit E/A.
Die Steuereinheit S kommuniziert über eine Schnittstelle K1 mit einer nicht näher dargestellten Warte, die den gesamten Prozeßablauf steuert. Die Kommunikation kann z.B. über die Datenbusleitung DBL erfolgen. Es sind aber auch andere Kommunikationsverbindungen mit der Warte denkbar. Für die digitale Kommunikation kann als Schnittstelle K1 ein ASIC der Fa. Siemens SPC4 verwendet werden. Die Kommunikation erfolgt nach dem Profibus PA Standard.
Für die anderen Verbindungen kann als Schnittstelle K1 ein HART-Modem, ein Foundation Fieldbus Controller oder ein CAN-Controller verwendet werden. Die Kommunikation erfolgt dann gemäß dem Hart bzw. Foundation Fieldbus oder CAN Standard. Diese internationalen Standards sind allgemein bekannt.
Weiterhin weist das Feldmeßgerät F einen von außen zugänglichen Steckanschluß SA auf, der mit der Steuereinheit S verbunden ist und als Schnittstelle dient. Da der Datenaustausch über diese Schnittstelle relativ beschränkt ist, reicht eine serielle Schnittstelle aus. Bei dieser Schnittstelle kann es sich um eine zusätzliche Schnittstelle oder aber auch um eine bereits vorhandene Update-Schnittstelle handeln. Die zweite Alternative ist insbesondere bei auf dem CAN-Standard beruhenden Systemen sinnvoll. Der Steckeranschluß SA ist mit einer Softwareschutzvorichtung SV verbindbar, die aus einem passenden Steckergegenstück SG besteht, in das ein elektronisches Bauteil B integriert ist, das eine Berechtigungsprüfung durch die Steuereinheit S erlaubt.
Auf die Art und Weise wie die Berechtigungsprüfung erfolgt wird weiter unten noch näher eingegangen.

In dem Speicher SP ist ein Steuerprogramm P gespeichert, das bei der Initialisierung der Steuereinheit S geladen und aufgerufen wird.
Dieses Steuerprogramm P wird z.B. bei der Herstellung des Feldmeßgerätes F im Speicher SP abgelegt.
Das Steuerprogramm P umfaßt mehrere Varianten V1, V2 etc..
Die Varianten V1, V2 etc. bewirken unterschiedliche Funktionalitäten des Feldmeßgerätes im Hinblick auf z.B. Meßsignalerfassung, Meßsignalauswertung, Kalibrierung, Ein/Ausgabefunktionen, Kommunikation, Eigenüberwachung etc. auf.
So kann die Variante V1 eine Basisfunktionalität des Feldgerätes erzeugen, die Variante V2 dagegen eine erweiterte Funktionalität.

Ist der Sensor SE austauschbar, so können sich die Varianten Vi sogar im Meßprinzip (z.B. Temperaturmessung, Differenzdruck) unterscheiden.

Zu jeder Variante Vi existiert eine Softwareschutzvorrichtung SVi, die die jeweilige Variante freischaltet. D.h. ist die Softwareschutzvorichtung SVi mit dem Steckeranschluß SA verbunden, so wird genau die Variante Vi von der Steuereinheit S ausgeführt, die eine ganz bestimmte Funktionalität bzw. eine Kombination gewisser Funktionalitäten erlaubt.
Jede andere Variante ist gesperrt, d.h. die Steuereinheit S kann diese Varianten nicht ausführen.
Dadurch daß bereits bei der Herstellung des Feldgerätes F ein Steuerprogramm mit unterschiedliche Varianten Vi abgespeichert werden, können diese durch eine entsprechende Softwareschutzvorrichtung Svi freigeschaltet werden.
Der Kunde benötigt die "richtige" Softwareschutzvorrichtung Svi, die am Feldgerät F angeschlossen werden muß, um die von ihm gewünschte Funktionalität des Feldgerätes F zu erhalten. Der Versand der Softwareschutzvorrichtung Svi kann z.B. per Post erfolgen.
Durch einfachen Austausch der Softwareschutzvorrichtung Svi kann die Funktionalität des Feldgerätes F geändert werden. Dies läßt sich somit sehr schnell und einfach bewerkstelligen. In bestimmten Fällen findet nicht einmal eine Unterbrechung der Meßwertaufnahme statt, so daß von der Warte aus der Austausch nicht bemerkbar ist. Durch die Softwareschutzvorichtung SVi ein ausreichender Programmschutz gewährleistet.

Als elektronisches Bauteil kann z.B. ein PIC-Baustein (peripheral interface controller) eingesetzt werden. Ein derartiger PIC-Baustein erlaubt eine einfache Datenverarbeitung und Datenkommunikation. Er ist nur einmal programmierbar und kann nicht ausgelesen werden. Ein spezieller PIC-Baustein PIC 12C5XX wird von der Firma von der Firma Microchip Technology Inc. hergestellt.
Denkbar sind aber auch andere wenig Platzbedarf benötigenden und gegen Auslesen geschützte Mikrocontroller ( z.B. von den Firmen Scenix, Atmel, Mitsubishi, etc.)

In einfacher Weise dient der Steckeranschluß SA auch als Update-Schnittstelle des Feldmeßgertätes F, über die z.B. neue Steuerprogramme bzw. Daten ( z.B. Parametrierfaktoren) in den Speicher Sp übertragen werden können.

In bevorzugter Weise handelt es sich bei der Steuereinheit S um einen Mikroprozessor.

Nachfolgend ist die Berechtigungsprüfung der Softwareschutzvorrichtung SV näher erläutert.

Nach einer Initialisierungsroutine des Feldmeßgerätes z.B. nach einer Spannungsunterbrechung wird die Kennung Ki der Softwareschutzeinrichtung SVi von der Steuereinheit S abgefragt. Aufgrund der Kennung wird dann die entsprechende Variante Vi freigeschaltet, d.h. die Steuereinheit S arbeitet nach der Variante Vi und bietet die der Variante Vi entsprechende Funktionalität.

Diese Abfrage muß in gewissen zeitlichen Abständen wiederholt werden, um die Verwendung einer Softwareschutzvorrichtung Vi bei verschiedenen Feldmeßgeräten auszuschließen.

Diese Kennung Ki kann z.B. in einfacher Weise in einem elektrisch programmierbaren Speicher (EPROM) als elektronischem Bauteil B abgespeichert werden.

Da ein EPROM leicht ausgelesen werden kann, ist dieser Softwareschutz nicht sehr weitreichend. PIC-Bausteine sind hierfür besser geeignet.

Einen besseren Schutz bieten Verfahren bei denen in der Steuereinheit S eine Zufallsgröße erzeugt wird, deren Wert sich im Laufe der Zeit in gewissem Sinne zufällig ändert, z.B. die Summe aus Betriebsstundenzähler und aktuellem Meßwert. Dieser Zufallswert Z wird an die Softwareschutzvorrichtung SV gesendet. In der Steuereinheit S und der Softwareschutzvorrichtung SV werden aus dem Zufallswert Z jeweils nach einem dort abgespeicherten Algorithmus neue Werte X1=F1(Z) und X2=F2(Z) berechnet und in der Steuereinheit S miteinander verglichen. Stimmt der von der Softwareschutzvorrichtung SVi an die Steuereinheit S übertragene Wert X2 nicht mit dem Wert X1 überein, so erfolgt nur die Freischaltung gewisser Basisfunktionalitäten. In einer strengeren Variante wäre auch ein Programm-Stop möglich.
Beide Werte X1 und X2 stimmen nur dann überein, wenn die beiden abgespeicherten Funktionen F1 und F2 gleich sind.

In einer bevorzugten Ausgestaltung wird in der Softwareschutzvorrichtung Svi der Wert X2 Und die Kennung Ki zu einer Sendegröße zusammengefaßt und an die Steuereinheit S gesendet. Denkbar ist eine Multiplikation von Ki und X2.
In der Steuereinheit wird aus der Sendegröße die Kennung Ki zurückgewonnen. Dies kann z.B. durch die Division durch X1 erfolgen. Nur wenn X1 und X2 übereinstimmen, wird in der Steuereinheit S eine sinnvolle Kennung Ki ermittelt aufgrund derer eine Variante ausgewählt werden kann.

Bei einem programmierbaren Feldmeßgerät F wird durch die Verwendung einer einfach austauschbaren Softwareschutzvorrichtung Svi ein wirksamer Steuerprogrammschutz erzielt.

## Patentansprüche

1. Programmierbares Feldgerät F mit einer Steuereinheit S, die zur Ausführung eines Steuerprogramms dient und die als Schnittstelle einen Steckeranschluß SA aufweist, der mit einer Softwareschutzvorrichtung Svi lösbar verbunden ist, die im wesentlichen aus einem Steckergegenstück SG mit integriertem elektronischen Bauteil B besteht, das eine Berechtigungsprüfung durch die Steuereinheit S erlaubt, **dadurch gekennzeichnet, daß** das Bauteil B einen Mikrocontroller, dessen Steuerprogramm gegen Auslesen geschützt ist, bzw. geschützt werden kann, aufweist.

2. Programmierbares Feldmeßgerät nach Anspruch 1, wobei das elektronische Bauteil B aus einem Peripheral interface controller besteht.

3. Programmierbares Feldmeßgerät nach einem der vorhergehenden Ansprüche, wobei der Steckeranschluß SA als Update-Anschluß des Feldmeßgerätes F dient.

4. Programmierbares Feldmeßgerät nach einem der vorhergehenden Ansprüche, wobei die Steuereinheit S aus einem Mikroprozessor besteht.

5. Verfahren zum Softwareschutz bei einem Feldmeßgerät F, das eine Steuereinheit S und einen Speicher SP mit verschiedenen Steuerprogrammvarianten aufweist, **gekennzeichnet durch** folgende Verfahrensschritte:
A) Start einer Initialisierungsroutine der Steuereinheit S,
B) Abfrage der Kennung einer mit dem Feldmeßgerät F lösbar verbundenen Softwareschutzeinrichtung SVi,
C) Auswahl einer Steuerprogrammvariante **durch** die Steuereinheit S aufgrund der Kennung.

6. Verfahren nach Anspruch 5, wobei mit der Abfrage eine in der Steuereinheit S erzeugte Zufallsgröße Z an die Softwareschutzeinrichtung Svi übersandt wird, aus der jeweils in der Steuereinheit S und in der Softwareschutzvorrichtung Svi nach einem Algorithmus neue Werte X1=F1(Z) und X2=F2(Z) berechnet werden, die in der Steuereinheit miteinander verglichen werden und bei fehlender Übereinstimmung X1=X2 nur eine Basisfunktionalität freigeschaltet wird.

7. Verfahren nach Anspruch 6, wobei mit dem in der Softwareschutzvorrichtung Svi berechneten Wert X2 die Kennung übertragen wird und in der Steuereinheit S ausgewertet wird.

## Claims

1. A programmable field measurement instrument F, having a control unit S which serves to execute a control program and has as interface a plug-type terminal SA which is detachably connected to a software protection device Svi, the latter substantially comprising a plug mating part SG with an integrated electronic component B which allows authorisation testing by the control unit S, **characterised in that** the component B has a microcontroller whereof the control program is protected or may be protected against being read out.

2. A programmable field measurement instrument according to Claim 1, in which the electronic component B comprises a peripheral interface controller.

3. A programmable field measurement instrument according to one of the preceding claims, in which the plug-type terminal SA serves as an update terminal of the field measurement instrument F.

4. A programmable field measurement instrument according to one of the preceding claims, in which the control unit S comprises a microprocessor.

5. A process for protecting software in a field measurement instrument F, which has a control unit S and a memory SP having various control program variants, **characterised by** the following process steps:
A) starting an initialisation routine of the control unit S,
B) interrogating the identifier of a software protection device SVi which is detachably connected to the field measurement instrument F,
C) on the basis of the identifier, selecting a control program variant by means of the control unit S.

6. A process according to Claim 5, in which on the interrogation a random variable Z generated in the control unit S is sent to the software protection device Svi, from which new values X1=F1(Z) and X2=F2(Z) are each calculated in accordance with an algorithm respectively in the control unit S and in the software protection device Svi, and these new values are compared with one another in the control unit and, in the event of an absence of agreement X1=X2, only a basic functionality is enabled.

7. A process according to Claim 6, in which the identifier is transmitted together with the value X2 calculated in the software protection device Svi and is evaluated in the control unit S.

## Revendications

1. Composant de terrain (F) programmable comprenant une unité de commande (S), qui est utilisée pour l'exécution d'un programme de commande et qui, en tant qu'interface, est munie d'une connexion à broches (SA), qui est raccordée de manière amovible à un dispositif de protection de logiciel (Svi), qui est formé sensiblement par un connecteur complémentaire (SG) muni d'un composant (B) électronique intégré, qui permet un contrôle d'autorisation via l'unité de commande (S), **caractérisé en ce que** le composant (B) est un microcontrôleur, dont le programme de commande est protégé, ou plus précisément est susceptible d'être protégé, contre toute lecture.

2. Composant de mesure de terrain programmable selon la revendication 1, dans lequel le composant électronique (B) est formé par un contrôleur d'interface périphérique.

3. Composant de mesure de terrain programmable selon l'une quelconque des revendications précédentes, dans lequel la connexion à broches (SA) fait fonction de connexion de mise à jour du composant de mesure de terrain (F).

4. Composant de mesure de terrain programmable selon l'une quelconque des revendications précédentes, dans lequel l'unité de commande (S) est formée par un microprocesseur.

5. Procédé de protection d'un logiciel dans un composant de mesure de terrain (F), qui comporte une unité de commande (S) et une mémoire (SP) avec différentes variantes du programme de commande, **caractérisé par** les étapes suivantes :
A) lancement d'une routine d'initialisation de l'unité de commande (S),
B) lecture du préfixe d'un dispositif de protection de logiciel (Svi) raccordé de manière amovible au composant de mesure de terrain (F),
C) sélection d'une variante du programme de commande par l'unité de commande (S) en fonction du préfixe.

6. Procédé selon la revendication 5, dans lequel pendant le processus de lecture une variable aléatoire (Z), générée dans l'unité de commande (S), est transmise vers le dispositif de protection de logiciel (Svi) et, à partir de ladite variable, des nouvelles valeurs X1 = F1 (Z) et X2 = F2(Z) sont calculées selon un algorithme respectivement dans l'unité de commande (S) et dans le dispositif de protection de logiciel (Svi) et sont comparées entre elles dans l'unité de commande et, en l'absence de coïncidence X1 = X2, seule une fonctionnalité de base est activée.

7. Procédé selon la revendication 6, dans lequel le préfixe est transmis avec la valeur X2 calculée dans le dispositif de protection de logiciel (Svi) et est analysé dans l'unité de commande (S).
